# FASCICULE DE BREVET EUROPEEN

(11) **EP 2 645 066 B1**
(45) Date de publication et mention de la délivrance du brevet: **11.07.2018**
(21) Numéro de dépôt: 13159599.3
(22) Date de dépôt: 15.03.2013
(51) Int. Cl.: G01C 23/00, B64D 43/00

(54) **Systeme d'affichage pour un aeronef et procede associe**
Anzeigesystem für ein Luftfahrzeug, und entsprechendes Verfahren
Display system for an aircraft and associated method

(30) Priorité: 27.03.2012 FR 1200903
(43) Date de publication de la demande: 02.10.2013
(73) Titulaire: Dassault Aviation, 75008 Paris (FR)
(72) Inventeur: Kou, Paul, 75013 PARIS (FR); Barral, Jérôme, 75015 PARIS (FR); Saint-Requier, Cyril, 78180 MONTIGNY-LE-BRETONNEUX (FR); Boulle, Eric, 13890 MOURIES (FR)
(74) Mandataire: Lavoix

(56) Documents cités:
- EP-A1- 2 161 650
- WO-A1-2004/037643
- WO-A2-2010/004114

## Description

La présente invention concerne un système d'affichage pour un aéronef selon le préambule de la revendication 1.

Un tel système d'affichage est destiné à être placé dans le cockpit d'un aéronef pour assister l'équipage de l'aéronef à la gestion et au pilotage de l'aéronef.

D'une manière connue, les systèmes d'affichage présents dans le cockpit des aéronefs comprennent des écrans d'affichage de paramètres de vol, tel que l'altitude, la situation horizontale, la vitesse air, la vitesse verticale, la vitesse air corrigée (ou CAS), des informations relatives au moteur, et à la configuration de sustentation de l'aéronef.

Les informations sont représentées généralement sur un écran dénommé écran d'affichage primaire (ou Primary Display Unit) placé en regard de chaque pilote.

Par ailleurs, un système d'affichage connu comprend en outre un ou plusieurs écrans multifonctions destinés à afficher des pictogrammes représentatifs des paramètres de navigation de l'aéronef, ainsi que des pictogrammes représentatifs des paramètres ou des commandes de systèmes fonctionnels de l'aéronef.

Les paramètres de navigation de l'aéronef incluent par exemple des données topographiques, des données d'approche, des informations sur le cap, sur les balises, et plus généralement sur le positionnement de l'aéronef par rapport au sol.

Les données relatives aux systèmes fonctionnels incluent notamment des affichages de paramètres mesurés sur les différents systèmes hydrauliques, électriques, de propulsion ou des systèmes avioniques de l'aéronef, tels que des pressions, des températures moteurs, et des états de systèmes avioniques.

Compte tenu du grand nombre de paramètres à afficher sur les écrans multifonctionnels, les pictogrammes sont répartis en plusieurs fenêtres affichables sélectivement par un ou plusieurs écrans. Pour accéder à ces différentes fenêtres, l'utilisateur du système d'affichage utilise généralement un organe de commande associé à cet écran. Il navigue entre les différentes fenêtres suivant une arborescence prédéfinie.

A cet effet, le système d'affichage comporte généralement une interface homme/machine constituée par exemple par un clavier et/ou par un organe de commande de type souris permettant d'accéder aux différentes fenêtres. Chacun des membres de l'équipage dispose généralement de sa propre interface pour pouvoir manipuler les données présentes sur les écrans multifonctionnels et naviguer entre les différentes fenêtres.

Compte tenu de la complexité des systèmes présents sur un aéronef, et des logiciels de navigation à manipuler, les pilotes doivent pouvoir naviguer facilement et rapidement entre les différents menus, afin d'appliquer les procédures adéquates lors des différentes phases de vol. Une navigation entre les fenêtres est en outre rendue nécessaire lors des dysfonctionnements éventuels se produisant sur l'aéronef.

A cet effet, bien que l'ergonomie d'utilisation des écrans et des fenêtres soit prédéfinie avec soin, il est parfois complexe de retrouver une fonctionnalité précise requise par une procédure donnée lors d'une phase de vol, notamment lorsque l'équipage à d'autres tâches à effectuer, ou lorsque les tâches doivent être effectuées rapidement et dans un ordre précis.

Pour simplifier le travail de l'équipage, US 7 191 406 décrit un système d'affichage qui permet, par simple pression sur différents boutons, d'afficher des fenêtres correspondant à des phases de vol données, par exemple une phase de montée, une phase de croisière, et une phase de descente de l'aéronef. Les informations nécessaires au pilotage de l'aéronef dans chacune des ces phases sont donc rangées par catégories en fonction de la phase de vol, ce qui permet au pilote, par actionnement d'un simple bouton, d'accéder à un grand nombre de données pertinentes.

Toutefois, un tel système d'affichage ne donne pas entière satisfaction. En effet, il reste un grand nombre de situations opérationnelles dans lesquelles les équipages doivent enchainer une pluralité d'actions de commande ou de vérification qui doivent être effectuées sur des fenêtres et/ou des écrans dispersés à travers le système d'affichage.

On connaît du document EP 2 161 650 un système d'affichage qui permet au pilote d'afficher sur les écrans du système des formats prédéterminés comprenant des informations de vol.

On connaît par ailleurs du document WO 2004/037643 une planche de bord d'aéronef comprenant des écrans auxiliaires affichant des données d'un instrument de secours et du pilote automatique.

Un but de l'invention est donc de fournir un système d'affichage permettant de simplifier la tâche de l'équipage, notamment lorsqu'une situation opérationnelle se produit dans laquelle un grand nombre d'actions de commande ou de vérification doivent être effectuées en utilisant des systèmes divers de l'aéronef.

A cet effet, l'invention a pour objet un système d'affichage selon la revendication 1.

Le système d'affichage selon l'invention peut comprend l'une ou plusieurs des caractéristiques des revendications 2 à 9.

L'invention a également pour objet un procédé d'affichage pour un aéronef selon la revendication 10.

Le procédé selon l'invention peut comprendre une ou plusieurs des caractéristiques des revendications 11 à 12. Le procédé selon l'invention peut comprendre la caractéristique suivante :
- l'état opérationnel de l'aéronef est choisi parmi un état de transition entre deux centres de contrôle aérien, un état de préparation d'une phase de descente vers une piste d'atterrissage, un état de préparation de l'entrée dans une zone de contrôle aérien à exigences spécifiques, notamment dans un espace océanique, la détection d'un écart entre deux capteurs redondants sur l'aéronef, notamment la détection d'un écart observé entre une information affichée sur un paramètre de vol sur un premier écran primaire et sur un même paramètre de vol sur un deuxième écran primaire, les deux paramètres provenant de deux capteurs redondants distincts.

L'invention sera mieux comprise à la lecture de la description qui va suivre, donnée uniquement à titre d'exemple, et faite en se référant aux dessins annexés sur lesquels :
- la figure 1 est une vue schématique d'un premier système d'affichage selon l'invention disposé dans un aéronef ;
- la figure 2 est une vue d'un écran additionnel du système d'affichage selon l'invention, sur lequel est affiché un premier bureau de base ;
- la figure 3 est une vue analogue à la figure 2, dans laquelle une interface homme/machine est activée :
- la figure 4 est une vue analogue à la figure 2, dans lequel un bureau de commandes est affiché ;
- la figure 5 est une vue analogue à la figure 4, dans laquelle un bureau comportant des raccourcis vers des commandes favorites est affiché ;
- la figure 6 est une vue d'un bureau représentatif de différentes configurations de vol de l'aéronef ;
- la figure 7 est une vue analogue à la figure 6 illustrant un bureau d'affichage d'un jeu de pictogrammes propre à être affiché séparément sur différents fenêtres des écrans principaux, dans une fenêtre de synthèse ;
- la figure 8 est une vue schématique des moyens principaux d'affichage du système d'affichage selon l'invention, dans laquelle différentes fenêtres à activer lors d'un changement de centre de contrôle aérien sont illustrées ;
- la figure 9 est une vue d'une première fenêtre de synthèse affichée sur l'écran additionnel regroupant des informations provenant des différentes fenêtres séparées du système de la figure 8 ;
- la figure 10 est une vue analogue à la figure 8 illustrant différentes fenêtres à activer lors d'une phase de préparation de début de descente de l'aéronef ;
- la figure 11 est une vue analogue à la figure 9 d'une deuxième fenêtre de synthèse correspondant à différents pictogrammes affichés lors de la préparation d'un début de descente ;
- la figure 12 est une vue analogue à la figure 8 illustrant différentes fenêtres à activer lors d'une phase de préparation d'entrée dans un espace océanique ;
- la figure 13 est une vue de fenêtre de synthèse visible sur l'écran additionnel lors de la préparation d'entrée dans un espace océanique ;
- la figure 14 est une vue analogue à la figure 8, illustrant les fenêtres à activer lors de la détection d'un écart d'altitude entre le poste de gauche et le poste de droite ; et
- la figure 15 est une vue analogue à la figure 9 illustrant une fenêtre de synthèse affichée lors de la détection d'un écart d'altitude entre le poste de gauche et le poste de droite.

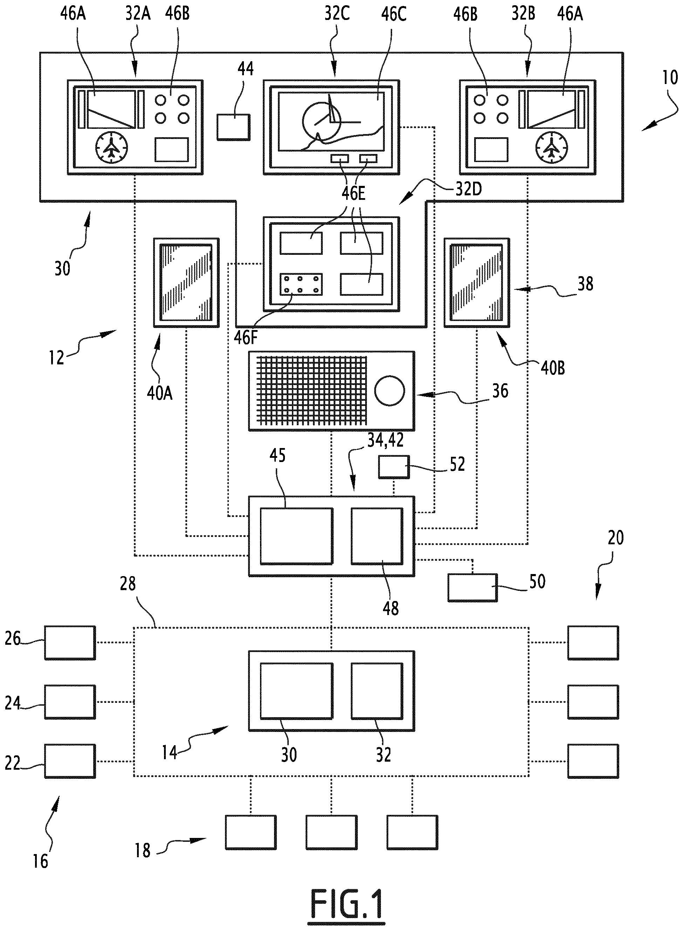

Un premier système d'affichage 10 selon l'invention est illustré par la figure 1. Ce système 10 est destiné à être placé dans le cockpit 12 d'un aéronef, afin de permettre à l'équipage de l'aéronef de piloter l'aéronef, de gérer sa navigation, de surveiller et de commander les différents systèmes fonctionnels présents dans l'aéronef.

L'aéronef est pourvu d'une unité centrale de commande d'avionique 14. L'unité 14 est raccordée à des systèmes 16 de capteurs de mesure sur l'aéronef, à des systèmes 18 de communication extérieure, et à des systèmes 20 d'actionnement des commandes de l'aéronef.

Les systèmes de mesure 16 comportent par exemple des capteurs 22 de mesure de paramètres extérieurs à l'aéronef, telle que la température, la pression ou la vitesse, des capteurs 24 de mesure de paramètres internes à l'aéronef et à ses différents systèmes fonctionnels et des capteurs de positionnement 26, tels que des capteurs GPS, des centrales à inertie, et/ou un altimètre.

Les systèmes de communication extérieure 18 incluent par exemple des systèmes radio VOR/LOC, ADS, DME, ILS, NLS, ou/et des systèmes radars.

Les systèmes de commande 20 incluent d'une part divers actionneurs propres à actionner des commandes de l'aéronef, tels que des volets, des gouvernes, des pompes, ou encore des circuits mécaniques, électriques ou/et hydrauliques, et d'autre part divers actionneurs logiciels propres à configurer les états avioniques de l'aéronef.

Les différents systèmes 16, 18 et 20 sont raccordés à l'unité centrale de commande 14, par exemple de manière numérique, par au moins un bus de données circulant sur un réseau interne 28 à l'aéronef.

L'unité centrale 14 comporte au moins un calculateur 30 et une mémoire 32 propre à recevoir les informations des différents systèmes 16, 18, 20 et à les traiter, et éventuellement à commander les systèmes 20 pour exécuter des commandes de vol.

Comme illustré par la figure 1, le système d'affichage 10 comporte au moins des moyens principaux 30 d'affichage comportant au moins un écran de base 32A à 32D et des moyens 34 de gestion de l'interface graphique de chaque écran de base 32A à 32D.

Avantageusement, les moyens principaux d'affichage 30 comportent en outre une interface 36 homme/machine présente dans le cockpit 12.

Selon l'invention, le système 10 comporte en outre des moyens additionnels 38 d'affichage comportant au moins un écran additionnel 40A, 40B et des moyens additionnels 42 de gestion de l'interface graphique de chaque écran additionnel 40A, 40B.

Dans l'exemple représenté sur la figure 1, les moyens 34 de gestion et les moyens additionnels 42 de gestion sont formés par la même unité. En variante, ces moyens 34, 42 sont formés par des unités distinctes.

Dans l'exemple représenté sur la figure 1, les moyens principaux d'affichage 30 comportent au moins deux écrans de base 32A, 32B situés de part et d'autre du cockpit 12, destinés à être placés en regard de chaque membre d'équipage, et au moins deux écrans centraux 32C, 32D destinés à être placés entre les membres d'équipage, et entre les écrans 32A, 32B. Les moyens principaux d'affichage 30 présentent ainsi une forme générale de T.

Les moyens principaux d'affichage 30 comprennent généralement au moins un écran de secours 44 destiné à afficher les données d'un instrument de secours.

Chaque écran 32A à 32D est raccordé aux moyens de gestion 34 pour être piloté par les moyens de gestion 34.

Les moyens de gestion 34 comportent au moins un processeur 45 et une mémoire 48.

La mémoire 48 reçoit une base de données stockant une pluralité de fenêtres d'affichages 46A à 46E destinées à être affichées sélectivement sur un ou plusieurs écrans 32A à 32D.

Ainsi, le processeur 46 des moyens de gestion 34 est propre à piloter chacun des écrans 32A à 32D pour qu'il affiche au moins une fenêtre d'affichage 46A à 46F comprenant des pictogrammes. Chaque fenêtre 46A à 46F est propre à être affichée sur un écran 32A à 32D.

Les fenêtres 46A à 46F sont par exemple des cadres dans lequel sont affichés des pictogrammes. Elles occupent tout ou partie de l'écran 32A à 32D sur lequel elles sont destinés à être affichées.

Au moins une partie des fenêtres 46A à 46F est destinée à être affichée en permanence lors du fonctionnement normal de l'aéronef, quelque soit l'état opérationnel de l'aéronef.

Certaines fenêtres 46A à 46F sont propres à être affichées sélectivement par l'utilisateur, notamment par actionnement d'un organe de commande présent sur l'interface homme/machine 36 ou directement par action sur un écran 32A à 32D.

Les pictogrammes affichés sur les fenêtres 46A à 46E sont choisis parmi des indicateurs alphanumériques, des indicateurs analogiques comme des jauges, des commandes actionnables par l'utilisateur, par exemple par sélection de la commande aux moyens d'un curseur de commande ou par toucher, des symboles ou icones propres à former un raccourci d'affichage d'une autre fenêtre distincte de la fenêtre actuelle, ou/et des champs de saisie de données alphanumériques.

Dans l'exemple représenté sur la figure 1, les écrans de base 32A, 32B sont des écrans primaires d'affichage destinés à l'affichage de paramètres de vol de l'aéronef.

Les moyens de gestion 34 affichent en permanence sur chaque écran primaire 32A, 32B au moins une fenêtre 46A, 46B, présentant au moins un des pictogrammes suivants : indicateur d'altitude, indicateur de situation horizontale, vitesse air, altitude, vitesse verticale, vitesse air corrigée, informations moteur, configuration de sustentation de l'aéronef.

Les écrans de base 32C et 32D sont des écrans multifonctionnels de navigation et/ou de suivi et de commande de systèmes d'avioniques.

Les fenêtres de navigation 46C à 46F affichées sur les écrans multifonctionnels 32C comportent par exemple des pictogrammes choisis parmi des données d'affichage de navigation provenant d'une base de données de stockage 50 raccordée aux moyens de gestion 34, des indicateurs de situation verticale et horizontale, des indicateurs de cap, et de positionnement par rapport à des points de référence au sol tels que des balises radios. Les fenêtres d'affichage 46C comprennent également des systèmes d'affichage des données radar captés par l'aéronef.

Les fenêtres 46E à 46F affichées sur l'écran inférieur 32D comprennent généralement des pictogrammes choisis parmi des indicateurs numériques relatifs à différents paramètres mesurés sur les systèmes de l'aéronef, des schémas de représentation et de commande de différents systèmes hydrauliques, électriques mécaniques ou avioniques présents sur l'aéronef, des indicateurs de niveau de carburant présent, et éventuellement, des fenêtres d'affichage de procédures à mener, provenant d'une base de données 52 de procédures de l'aéronef (par exemple désignée par le terme « Electronic Flight Book »).

Au moins un écran 32A à 32D est également apte à afficher des messages de statut de l'aéronef, tel que des messages d'alerte ou d'urgence.

Une partie des fenêtres 46C à 46F présentes sur les écrans 32C, 32D est propre à être remplacée par d'autres fenêtres stockées dans la base de données 40 et invisibles sur l'écran 32C, 32D lorsque les fenêtres 46C, 46E et 46F sont visibles sur l'écran.

Le passage d'une fenêtre visible 46C à 46F à une fenêtre invisible est effectué par exemple par action sur un bouton de commande présent sur l'interface homme/machine 36, par sélection d'une zone activable sur l'un des écrans 32C, 32D à l'aide d'un curseur piloté par l'interface 36, ou par action directe tactile sur l'une des écrans 32C, 32D.

Dans un mode de réalisation, l'interface homme/machine 36 est formée par un clavier mécanique, et/ou d'un organe de commande tel qu'une souris présente dans le cockpit 12, par exemple sous les écrans 32C, 32D.

En variante, l'interface homme/machine 36 est formée directement par le caractère tactile des écrans 32A à 32D, et/ou, selon l'invention, par les moyens additionnels 38 d'affichage, comme on le verra plus bas.

Comme illustré par la figure 1, les moyens additionnels d'affichage 38 comportent au moins un écran 40A, 40B additionnel, et des moyens additionnels 32 de gestion de l'interface graphique de chaque écran 40A, 40B.

Selon l'invention, les moyens additionnels de gestion 42 sont propres à afficher sur le ou sur chaque écran additionnel 40A, 40B au moins une fenêtre de synthèse dépendant d'un état opérationnel de l'aéronef. Comme on le verra en détails plus bas, la fenêtre de synthèse regroupe au moins un premier pictogramme présent sur une première fenêtre 46A à 46F des moyens principaux d'affichage 30 et un deuxième pictogramme présent sur une deuxième fenêtre 46A à 46F, destinée à être affichée de manière séparée de la première fenêtre 46A à 46F, soit sur des écrans 32A à 32D différents, soit sur le même écran 32A à 32D, mais non simultanément avec la première fenêtre.

Avantageusement, chaque écran additionnel 40A, 40B est formé par un écran tactile actionnable directement au toucher par un utilisateur. L'écran tactile est de préférence monté de manière amovible dans le cockpit 12. Il est apte à être détaché manuellement à l'écart des moyens principaux d'affichage 30 sans avoir à utiliser d'outil de démontage.

Chaque écran 40A, 40B est propre à constituer également une interface homme/machine, notamment un clavier alphanumérique destiné à effectuer les mêmes fonctions que l'interface 36, ou à remplacer totalement l'interface 36.

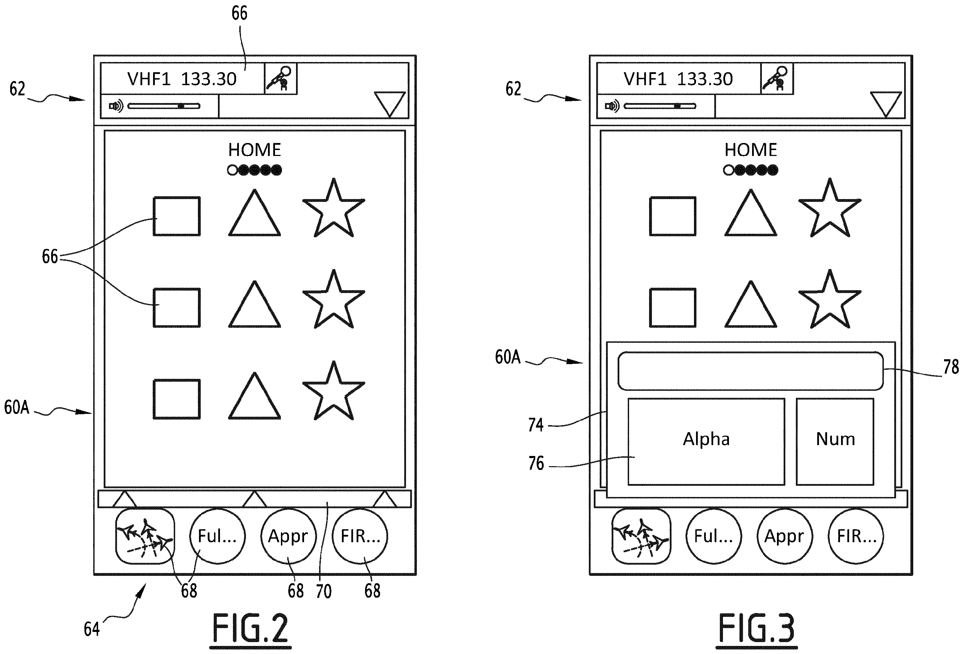

Un exemple de mise en oeuvre des moyens additionnels d'affichage 38 va maintenant être décrit en regard des figures 2 à 15.

Dans l'exemple particulier illustré sur les figures 2 à 7, les moyens additionnels de gestion 42 sont avantageusement aptes à afficher, sur chaque écran additionnel 40A, 40B au moins une fenêtre formant un bureau 60A à 60E sélectionnable par l'utilisateur, au moins une fenêtre permanente 62 visible quelque soit le bureau 60A à 60E affiché par l'utilisateur et au moins un bandeau de commande 64 visible indépendamment du bureau 60A à 60E affiché par l'utilisateur.

La fenêtre permanente 62 est propre à afficher des pictogrammes 64 indépendamment de l'état opérationnel de l'aéronef, et du bureau 60A à 60E affiché sur l'écran additionnel 40A, 40B.

Dans l'exemple représenté sur la figure 2, les pictogrammes 54 affichés sur la fenêtre permanente 62 sont par exemple un indicateur radio, tel qu'une fréquence VHF, un bouton de commande d'un micro et un bouton de commande du son.

La fenêtre permanente 62 peut être ouverte par l'utilisateur pour afficher à la place et au dessus du bureau 60A à 60E une pluralité de zones normalement cachées, chaque zone comprenant des pictogrammes 54 supplémentaires.

Le bandeau de commande 64 comporte une pluralité de boutons de navigation 68 permettant à l'utilisateur de passer d'un bureau 60A à 60E à un autre. Il comporte en outre une zone d'activation 70 d'une interface homme/machine, tel qu'un clavier alphanumérique.

Lorsqu'un utilisateur presse la zone d'activation 70, les moyens additionnels 42 de gestion de l'interface graphique affichent une fenêtre 74 d'interface comprenant un clavier alphanumérique 76 et avantageusement une zone de lecture 78 des informations entrées sur le clavier 76 par un utilisateur.

Dans l'exemple représenté sur la figure 2, au moins un premier bureau 60A propre à être affiché par les moyens additionnels 42 de gestion est un bureau de base. Ce bureau de base 60A comporte une pluralité de pictogrammes 66 par exemple constitués par des icônes de commande destinées à afficher des fenêtres choisies. Ces icônes 66 sont avantageusement programmables par l'utilisateur et mémorisées dans la mémoire. Elles sont sélectionnables notamment par appui tactile de l'opérateur sur l'icône.

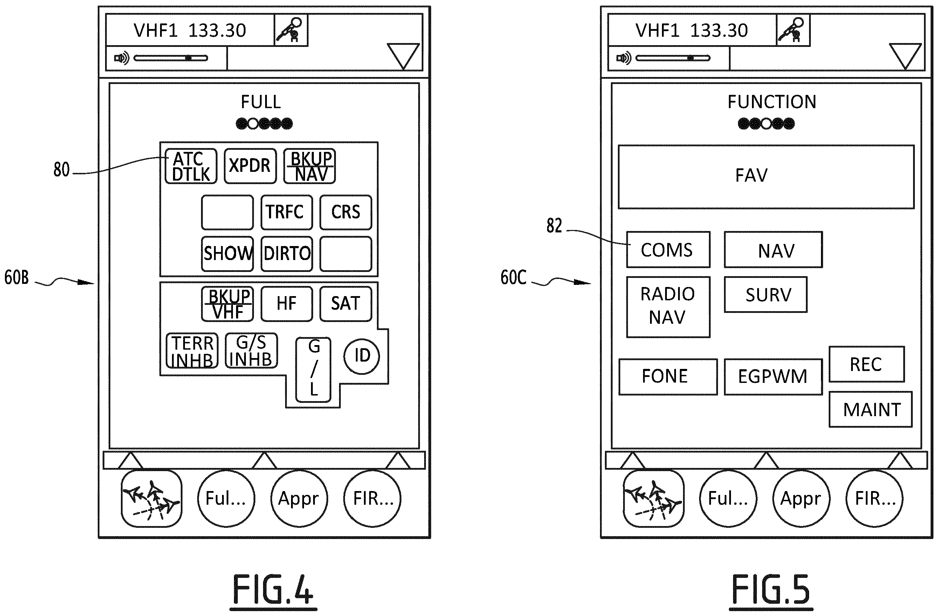

En référence à la figure 4, au moins un deuxième bureau 60B propre à être affiché par les moyens additionnels 42 comporte un ensemble de boutons de commande virtuels, permettant de commander l'affichage sur les moyens principaux d'affichage 30 de différentes configurations de fenêtres 46A à 46E.

Les boutons de commande 80 sont activables, par exemple par sélection d'un curseur, ou directement par pression sur l'écran 40A, 40B.

En référence à la figure 5, le bureau 60C est un bureau personnalisable par l'utilisateur comportant un certains nombre de bouton de commande 82 donnant accès soit à un menu de sélection, soit à un menu d'action, soit à une boîte de dialogue, soit à une page spécifique. Les boutons 82 donnent accès à des menus regroupant différentes familles fonctionnelles de l'aéronef, par exemple les communications, la navigation, la radionavigation, la surveillance de l'aéronef, etc.

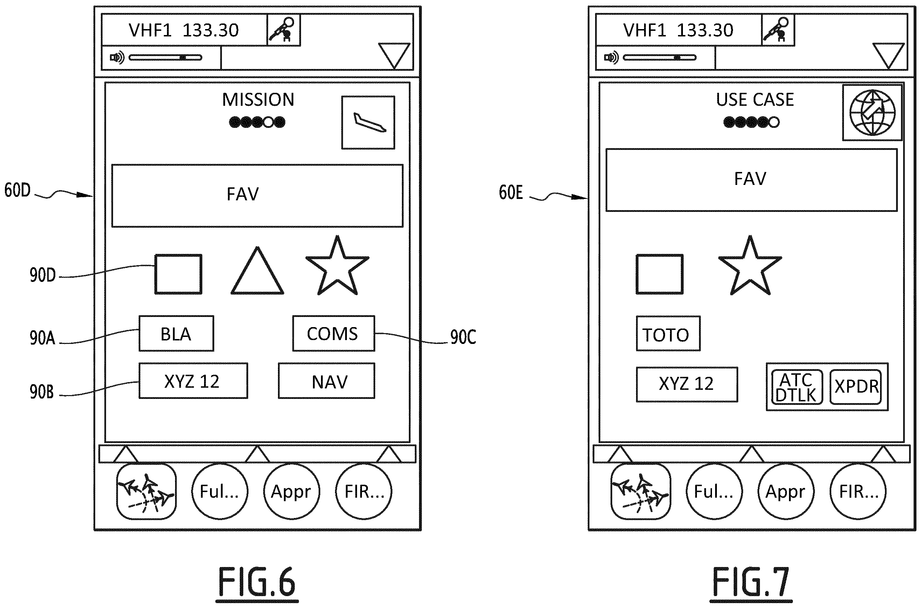

Comme illustré par la figure 6 et par la figure 7, selon l'invention, les moyens additionnels 42 de gestion d'interface sont propres à afficher au moins une fenêtre de synthèse 60D, 60E dépendant de l'état opérationnel de l'aéronef, cette fenêtre de synthèse regroupant des pictogrammes affichables séparément sur des fenêtres distinctes des moyens principaux d'affichage 30.

Par « état opérationnel de l'aéronef », on entend une phase particulière de mission telle que représentée sur le bureau 60D ou un évènement particulier au sein d'une mission, engendré par exemple par une modification à venir de phase de mission, un changement de configuration de navigation, ou par un dysfonctionnement sur l'aéronef.

La phase de mission est par exemple une phase en vol, tel qu'une phase de décollage, une phase de vol en croisière, ou une phase d'atterrissage de l'aéronef.

En variante, la phase de mission est une phase au sol, tel qu'une phase de parking ou phase de roulage.

La différence de configuration de navigation peut provenir d'un passage d'un centre de contrôle aérien à un autre ou un passage dans une zone à contrôle aérien à exigences spécifiques, comme une zone océanique.

En variante, la modification à venir de phase de mission peut être la préparation à un début de descente ou la préparation à l'arrivée en vol stationnaire.

L'apparition d'un dysfonctionnement dans l'aéronef peut résulter par exemple de l'apparition de données discordantes entre deux capteurs redondants de l'aéronef.

Avantageusement, les moyens additionnels de gestion 42 comportent des moyens de détection de l'état opérationnel de l'aéronef et de moyens propres à commuter automatiquement l'affichage d'une fenêtre de synthèse en fonction de l'état opérationnel de l'aéronef détectés par les moyens de détection, et notamment lors du passage d'un premier état opérationnel de l'aéronef, à un deuxième état opérationnel de l'aéronef.

En variante, le système comporte des moyens de commande, dans un premier état opérationnel de l'aéronef, d'une fenêtre de synthèse destinée à être affichée dans un deuxième état opérationnel de l'aéronef alors que le deuxième état opérationnel n'est pas détecté par les moyens de détection. Ces moyens comprennent par exemple une icône ou un symbole affiché sur l'écran additionnel 40A, 40D.

Dans encore une autre variante, plusieurs fenêtres de synthèse sont propres à être affichées dans un état opérationnel donné, les moyens additionnels de gestion 42 comportant alors un moyen de sélection, par un membre de l'équipage de la fenêtre de synthèse à afficher.

Comme précisé plus haut, chaque fenêtre de synthèse 60D, 60E comporte au moins un premier pictogramme 90A à 90C destiné à être affiché sur une première fenêtre 46A à 46F des moyens principaux d'affichage 30, et au moins un deuxième pictogramme 90A à 90C destiné à être affiché sur une deuxième fenêtre 46A à 46F des moyens principaux d'affichage 30.

La première fenêtre 46A à 46F et la deuxième fenêtre 46A à 46F sont par exemple affichées simultanément sur deux écrans distincts 32A à 32D des moyens principaux d'affichage 30.

En variante, la première fenêtre 46A à 46F et la deuxième fenêtre 46A à 46F sont propres à être affichées sélectivement sur le même écran de base 32A à 32D, les deux fenêtres n'étant pas affichables simultanément.

Ainsi, dans les deux cas précités, la première fenêtre et la deuxième fenêtre sont affichées de manière séparée soit sur deux écrans séparés, soit sur le même écran, mais non simultanément.

Comme illustré par les figures 6 et 7, les pictogrammes 90A à 90C sont par exemple des commandes directes, des indicateurs alphanumériques ou analogiques de paramètres de l'aéronef, ou des icônes propres à piloter l'affichage d'une autre fenêtre sur l'écran additionnel 40A, 40B, ou/et sur les moyens principaux d'affichage 30, ou encore des champs de saisie alphanumérique.

Comme illustré par la figure 6, au moins une partie des pictogrammes 90D peuvent en outre être paramétrables par l'utilisateur.

Les pictogrammes 90A à 90B affichés sur chaque feuille de synthèse 60D sont adaptés à l'état opérationnel détecté de l'aéronef et permettent à l'équipage de disposer des données nécessaires pour cet état opérationnel, sans avoir à naviguer sur les fenêtres affichées sur les écrans de base 32A à 32D.

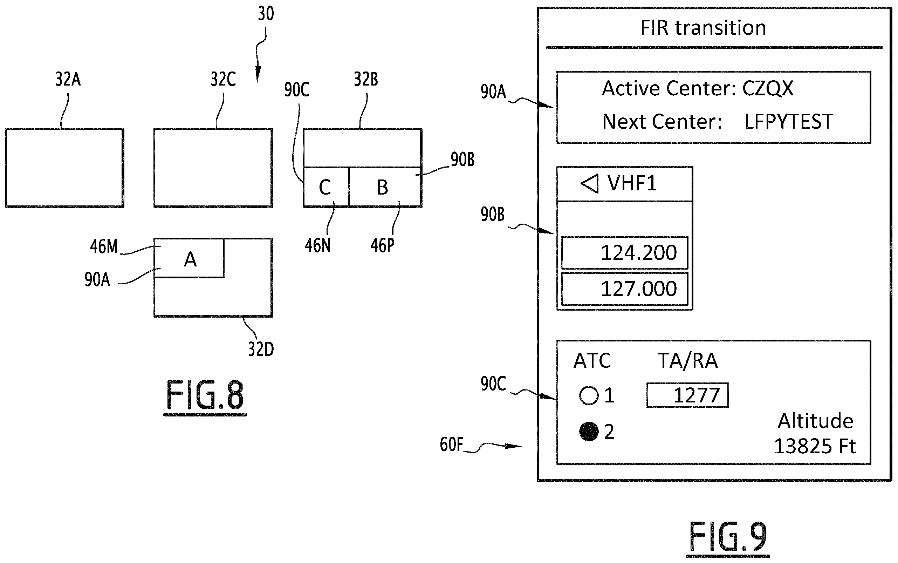

Un premier exemple de mise en oeuvre d'un procédé d'affichage selon l'invention mis en oeuvre à l'aide du système d'affichage 10 va maintenant être décrit, en regard des figures 8 et 9.

Cet exemple correspond par exemple à un changement d'état opérationnel de l'aéronef en préparation d'une phase de passage d'un aéronef depuis une première zone de contrôle aérien vers une deuxième zone de contrôle aérien.

La détection du changement d'état opérationnel est effectuée par exemple par rapport à la position de l'avion sur le plan de vol ou à un message « datalink » de type « Next Data Authority » ou « AFN Contact Advisory » préparant la transition entre deux zones de contrôle aérien.

En préparation à cette phase et lorsque les moyens de détection détectent que le changement de centre de contrôle doit bientôt s'opérer, les moyens additionnels 42 affichent une fenêtre de synthèse 60F visible sur la figure 9. La fenêtre 60F regroupe une pluralité de pictogrammes 90A, 90B, 90C visibles sur des fenêtres séparées 46M, 46N, 46P, des moyens principaux d'affichage 30, représentées schématiquement sur la figure 8.

Ainsi, au moins un pictogramme 90A est représentatif d'une information affichée sur une première fenêtre 46M d'un écran de base 32D destiné par exemple à former un écran multifonctionnel. Au moins un deuxième pictogramme 90B, 90C affiché par les moyens additionnels 42 sur l'écran additionnel 40 est affiché sur des fenêtres respectives 46N, 46P d'un écran de base 32B distinct de l'écran de base 32D.

En particulier, dans l'exemple représenté, le premier pictogramme 90A représente le centre de contrôle aérien actuellement actif, et celui destiné à devenir actif.

Le deuxième pictogramme 90B est un indicateur numérique indiquant la fréquence radio pour la phonie, et également un organe de commande permettant de commuter d'une fréquence radio à une autre.

Le troisième pictogramme 90C est un organe de commande permettant de changer le code transpondeur pour se conformer à une demande du nouveau centre de contrôle.

La fenêtre de synthèse 60F permet donc à un membre d'équipage d'effectuer des actions nécessaires au passage d'un premier état opérationnel de l'aéronef à un deuxième état opérationnel de l'aéronef et de contrôler ce passage sans avoir à chercher des informations et/ou des commandes distinctes sur différents écrans 32B, 32D des moyens principaux d'affichage 30.

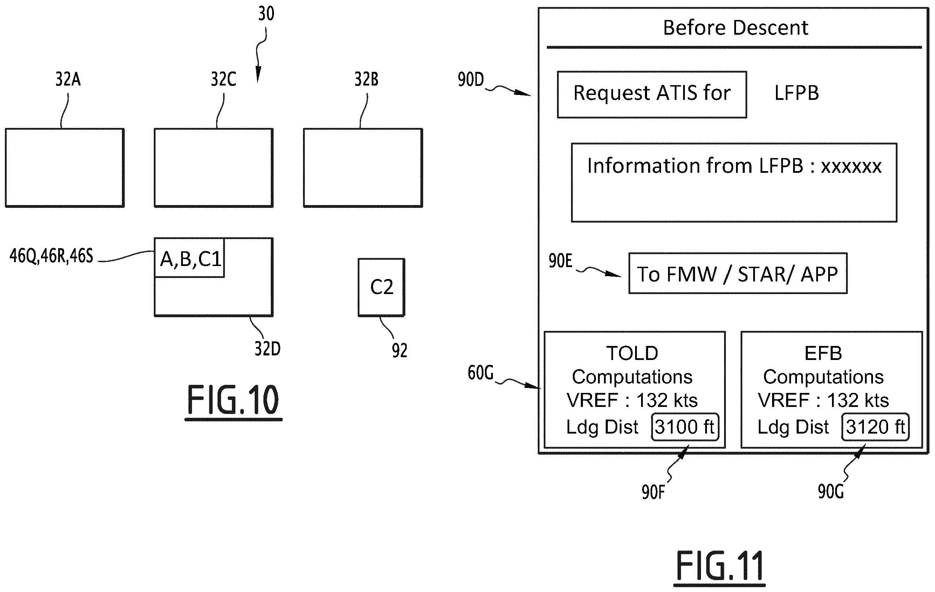

Un deuxième exemple de mise en oeuvre du procédé d'affichage selon l'invention est illustré par les figures 10 et 11.

Ce procédé est destiné à être appliqué lors d'un changement d'état opérationnel de l'aéronef en vue de la préparation d'une phase de descente.

Ce changement est détecté automatiquement par les moyens additionnels 42 sur la base d'une position de l'avion sur le plan de vol, sur la base d'une distance donnée par rapport à un point fixe de début de descente, sur la base d'une durée estimée avant le point fixe de descente, ou sur la base d'un message du contrôle aérien autorisant le début de descente.

Une fenêtre de synthèse 60G est alors affichée sur l'écran additionnel 40A, 40B par les moyens additionnels 42. Cette fenêtre regroupe différents pictogrammes 90D, 90E, 90F, 90G destinés à être affichés sur différentes fenêtres 46Q à 46S d'au moins un écran de base 32D.

A cet effet, un premier pictogramme 90D affiché sur la fenêtre de synthèse 60G correspond à des informations visibles sur une première fenêtre 46Q d'un premier écran de base 32D.

Un deuxième pictogramme 90E correspond à un raccourci vers une deuxième fenêtre affichable sur le même écran 32D par commutation et remplacement de la première fenêtre 90Q par la deuxième fenêtre 46R. Le troisième pictogramme 90F correspond à un champ affiché sur une troisième fenêtre 46S affichable sur l'écran 32D en remplacement soit de la première fenêtre 46Q, soit de la deuxième fenêtre 46R par commutation.

Le quatrième pictogramme 90G correspond à une information susceptible d'être obtenue sur une documentation papier 92 ou dans une base de données 52 de documentation électronique de type EFB « Electronic Fly Bag ».

Ainsi, le premier pictogramme 90D permet à l'équipage de rechercher un service d'information de trafic automatique (ATIS) de l'aéroport de destination directement sur l'écran 40A, 40B. Le deuxième pictogramme 90E permet à l'équipage d'afficher sur l'écran 32D, une fenêtre 46R permettant de renseigner les paramètres de l'approche.

Les troisième et quatrième pictogrammes 90F, 90G permettent de vérifier que les calculs de performance de cette fenêtre de suivi du vol 46R sont corrects, en comparant les valeurs calculées sur cette fenêtre 46R avec celles qui sont tabulées dans la base de données 52.

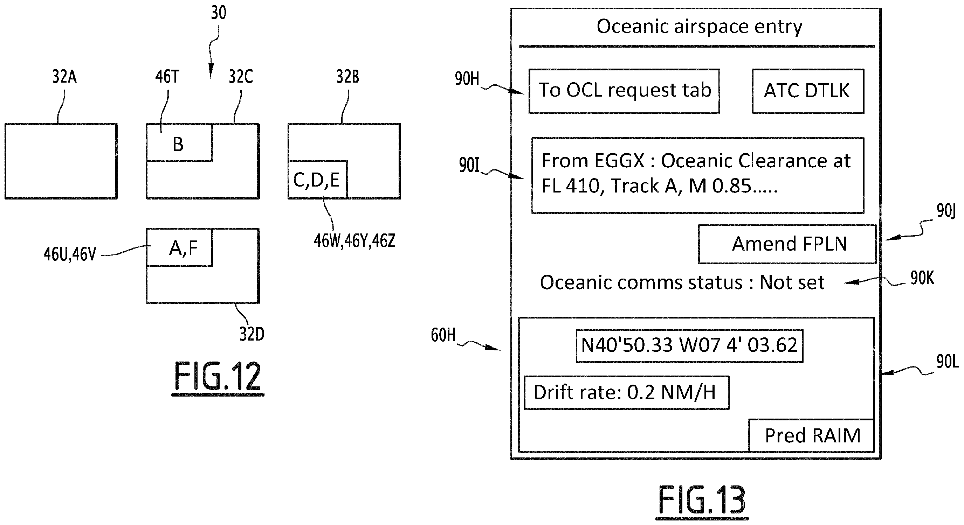

Un troisième exemple de mise en oeuvre d'un procédé d'affichage selon l'invention est illustré par les figures 12 et 13.

Le procédé est mis en oeuvre notamment lors de la préparation à un passage dans une zone de contrôle aérien à exigences spécifiques, tel qu'une entrée en espace océanique.

Le passage dans cet état opérationnel est détecté automatiquement par les moyens additionnels 42 sur la base de la position de l'avion sur le plan de vol, ou bien sur la base d'une distance et/ou d'une durée avant une entrée en zone de contrôle aérien à exigences spécifiques.

Une troisième fenêtre de synthèse 60H est alors affichée par les moyens additionnels 42 sur l'écran additionnel 40. Comme précédemment, cette fenêtre comporte des pictogrammes 90H, 90I, 90J, 90K et 90L repris sur différentes fenêtres 46T à 46Z visibles de manière séparées sur des écrans de base 32A à 32D des moyens principaux d'affichage 30.

Ainsi, les pictogrammes 90H constituent des raccourcis permettant d'afficher sélectivement l'une des fenêtres 46U, 46V sur l'écran 32D.

Le pictogramme 90I affiche des informations présentes sur une fenêtre 46T de l'écran 32C du système de suivi de vol. La fenêtre 90J est un raccourci permettant d'afficher la fenêtre 46P sur l'écran 32C au cas où cette fenêtre ne serait pas affichée.

Le pictogramme 90K est un indicateur alphanumérique résultant de plusieurs informations exposées sur les fenêtres 46W, 46Y, 46Z commutables de manière séparée sur l'écran 32B.

Le pictogramme 90L reprend des informations géographiques présentes sur l'une des fenêtres 46Y de l'écran 32B, qui n'est pas affichable simultanément avec d'autres fenêtres 46W, 46Z de ce même écran 32B.

Ainsi, en pressant sur le pictogramme 90H, le membre d'équipage peut obtenir l'accord océanique du centre de contrôle adéquat.

Puis, en vérifiant les informations présentes sur le pictogramme 90I, le membre d'équipage peut ensuite activer le pictogramme 90J pour mettre à jour le plan de vol avec l'accord obtenu.

Le membre d'équipage peut ensuite vérifier sur le pictogramme 90K si la radio HF est opérationnelle.

Il peut alors relever sur le pictogramme 90L la position et la date actuelle et le taux de dérive des centrales inertielles pour faire un calcul de suivi d'intégrité de receveur autonome (désigné par l'acronyme RAIM).

Il peut alors revenir sur le pictogramme 90K pour configurer les moyens de communication et effectuer certaines opérations de connexion à un centre de contrôle en pressant une des icônes 90H présentes sur la fenêtre de synthèse 60H.

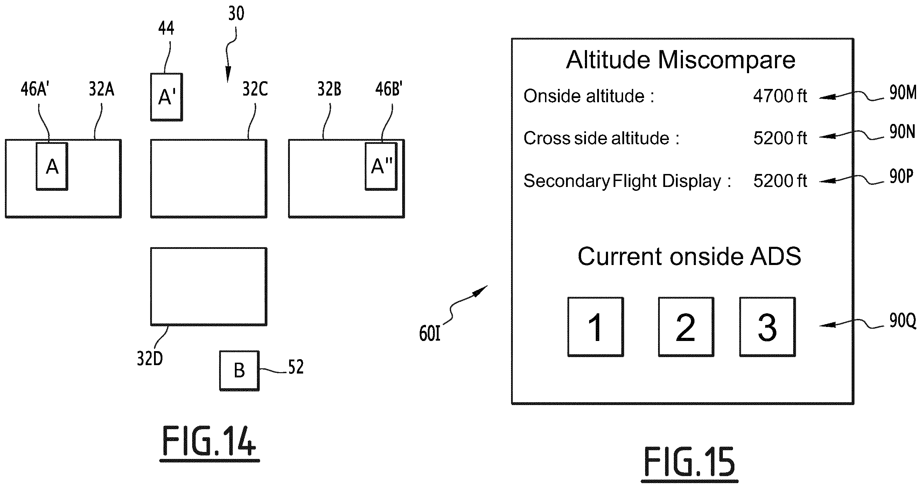

Un autre exemple de mise en oeuvre du procédé d'affichage selon l'invention est illustré par les figures 14 et 15.

Ce procédé est mis en oeuvre lorsque deux capteurs redondants présents sur l'aéronef donnent des informations différentes.

Les moyens additionnels 62 de gestion d'affichage affichent alors une quatrième fenêtre de synthèse 60I sur l'écran additionnel 40A, 40B. Cette quatrième fenêtre 60I comporte un premier pictogramme 90M, un deuxième pictogramme 90N, et un troisième pictogramme 90Q.

Les premier et deuxième pictogrammes 90M et 90N présentent des informations affichées sur deux fenêtres 46A' et 46B' affichées respectivement sur les écrans 32A, 32B de base situés de part et d'autre du cockpit. En particulier, la fenêtre 46A' affiche l'information relative à un premier capteur de mesure sur l'aéronef, alors que la fenêtre 46B' affiche l'information relative à deuxième capteur de l'aéronef, redondant avec le premier capteur.

Les pictogrammes 90M et 90N affichent donc des informations de nature analogues (par exemple des altitudes), mais différentes, car provenant de capteurs de mesures distincts. Le premier pictogramme 90M donnant une information liée au premier capteur de mesure est donc affiché seulement sur la première fenêtre 46A' sans être affiché sur la deuxième fenêtre 46B'. Le deuxième pictogramme 90N donnant une information résultant du deuxième capteur de mesure est affiché seulement sur la deuxième fenêtre 46B' sans être affiché sur la première fenêtre 46A'.

L'écran de secours 44 affiche par ailleurs une information qui est reprise par le pictogramme 90P. La fenêtre de synthèse 60I affiche ainsi trois informations provenant de trois capteurs différents sur le même écran, ce qui permet au membre d'équipage d'identifier le capteur donnant une information déficiente.

En outre, la fenêtre 60I comporte un quatrième pictogramme 90Q formé par un commutateur permettant de commuter l'unité sur le capteur jugé fiable.

Un tel commutateur est généralement présent dans le cockpit sur un panel de réversion.

Lorsqu'une discordance est observée entre les données fournies par plusieurs capteurs, les moyens additionnels 42 affichent la fenêtre de synthèse 60I sur l'écran additionnel 40A, 40B.

Le membre d'équipage compare les données fournies par les différents capteurs avec celles du capteur de secours en observant les pictogrammes 90M à 90P. Il peut alors basculer la prise de données sur un capteur donné à l'aide du commutateur formé par le pictogramme 90Q.

Le système d'affichage 10 selon l'invention est donc particulièrement efficace pour synthétiser, sur un même écran additionnel 40A, 40B, une pluralité d'informations dispersées sur des fenêtres variées propres à être affichées sur divers écrans 32A à 32D de moyens d'affichage principaux 30.

Cette synthèse est effectuée en fonction de l'état opérationnel de l'aéronef, de sorte que l'affichage présent sur l'écran additionnel 40A, 40B est adapté aux actions devant être effectuées par l'équipage dans cet état opérationnel. Le système d'affichage 10 est donc particulièrement efficace et simplifie significativement les tâches de l'équipage.

## Revendications

1. Système d'affichage (10) pour un aéronef, comprenant des moyens principaux d'affichage (30) comportant :
- au moins un écran de base (32A à 32D), et
- des moyens (34) de gestion de l'interface graphique du ou de chaque écran de base (32A à 32D), les moyens de gestion (34) étant propres à afficher de manière séparée sur les moyens principaux d'affichage (30) au moins une première fenêtre d'affichage (46A à 46F) et au moins une deuxième fenêtre d'affichage (46A à 46F), chaque fenêtre d'affichage (46A à 46F) affichant au moins un pictogramme représentatif d'un paramètre et/ou d'une commande de l'aéronef,
- des moyens additionnels d'affichage (38) comportant :
- au moins un écran additionnel (40A, 40B) ; et
- des moyens additionnels (42) de gestion de l'interface graphique de l'écran additionnel (40A, 40B) propres à afficher sur l'écran additionnel (40A, 40B), dans un état opérationnel donné de l'aéronef, une fenêtre de synthèse (60D à 60I) dépendant de l'état opérationnel de l'aéronef, **caractérisé en ce que** la fenêtre de synthèse (60D à 60I) comprend au moins un premier pictogramme (90A à 90Q) propre à être affiché sur la première fenêtre d'affichage (46A à 46F) des moyens principaux d'affichage (30) sans être affiché sur la deuxième fenêtre (46A à 46F) des moyens principaux d'affichage, et au moins un deuxième pictogramme (90A à 90Q) destiné à être affiché sur la deuxième fenêtre d'affichage (46A à 46F) des moyens principaux d'affichage (30) sans être affiché sur la première fenêtre (46A à 46F) des moyens principaux d'affichage (30), les moyens additionnels (42) de gestion d'interface étant aptes à afficher une première fenêtre de synthèse (60D à 60H) comprenant un premier jeu de pictogrammes (90A à 90Q) issus de deux fenêtres séparées (46A à 46F) des moyens principaux d'affichage (30) dans un premier état opérationnel de l'aéronef, et une deuxième fenêtre de synthèse (60D à 60H) comprenant un deuxième jeu de pictogrammes (90A à 90Q) issus de deux fenêtres séparées (46A à 46D) des moyens principaux d'affichage (30) dans un deuxième état opérationnel de l'aéronef, le premier jeu de pictogrammes étant différent du deuxième jeu de pictogrammes,
et **en ce que** les moyens additionnels (42) de gestion d'interface comprennent des moyens de détection d'un état opérationnel courant de l'aéronef, et des moyens de commutation automatique propres à faire basculer automatiquement l'affichage sur l'écran additionnel (40A, 40B) depuis la première fenêtre de synthèse (60D à 60H) vers la deuxième fenêtre de synthèse (60D à 60H) en fonction de l'état opérationnel courant détecté par les moyens de détection.

2. Système (10) selon la revendication 1, **caractérisé en ce que** les moyens principaux d'affichage (30) comprennent un premier écran de base (32B) et un deuxième écran de base (32D) distinct et à l'écart du premier écran de base (32B), les moyens de gestion (34) étant propres à afficher la première fenêtre d'affichage (46N) sur le premier écran de base (32B), et à afficher séparément la deuxième fenêtre (46M) sur le deuxième écran de base (32D).

3. Système (10) selon la revendication 2, **caractérisé en ce que** le premier écran de base (32A, 32B) est un écran primaire de pilotage propre à afficher des pictogrammes représentatifs de paramètres de pilotage de l'aéronef, le deuxième écran de base (32C, 32D) étant un écran multifonctionnel propre à afficher des pictogrammes représentatifs de la navigation de l'aéronef et/ou de la gestion de systèmes de l'aéronef

4. Système (10) selon la revendication 1 ou 2, **caractérisé en ce que** les moyens principaux d'affichage (30) comprennent un premier écran de base (32D), les moyens de gestion (34) étant propres à afficher la première fenêtre (46Q) sur le premier écran de base (32D), et à afficher la deuxième fenêtre (46R) sur le premier écran de base (32D) en remplacement ou en complément de la première fenêtre (46Q), avantageusement sur interaction d'un utilisateur avec un organe de commande de l'affichage du premier écran de base (32D).

5. Système (10) selon l'une quelconque des revendications précédentes, **caractérisé en ce que** les moyens additionnels (42) de gestion sont aptes à afficher sélectivement, dans le même état opérationnel de l'aéronef, au moins une première fenêtre de synthèse (60D) et au moins une première fenêtre additionnelle de synthèse (60E), les moyens auxiliaires d'affichage (38) comprenant un moyen de sélection par un utilisateur de la première fenêtre de synthèse (60D) et/ou de la première fenêtre additionnelle de synthèse (60E).

6. Système (10) selon l'une quelconque des revendications précédentes **caractérisé en ce que** les moyens additionnels (42) de gestion d'interface sont propres à afficher sur l'écran additionnel (40A, 40B) une interface (72) de dialogue homme/machine, tel qu'un clavier alphanumérique.

7. Système (10) selon l'une quelconque des revendications précédentes, **caractérisé en ce que** les moyens additionnels (42) de gestion d'interface graphique sont propres à afficher sur l'écran additionnel (40A, 40B), indépendamment de l'état opérationnel de l'aéronef, au moins une fenêtre prédéfinie (60A, 60B, 60C) de pictogrammes représentatifs de paramètres et/ou de commandes de vol.

8. Système (10) selon l'une quelconque des revendications précédentes, **caractérisé en ce que** chaque pictogramme est représentatif d'un paramètre et/ou d'une commande de vol choisi parmi un indicateur alphanumérique ou analogique d'un paramètre de vol, un bouton virtuel propre à actionner une commande d'un système de l'aéronef, un raccourci d'accès à une autre fenêtre, un chemin d'accès à une documentation, ou/et un champ de saisie de données alphanumériques.

9. Système (10) selon l'une quelconque des revendications précédentes, **caractérisé en ce que** l'écran additionnel (40A, 40B) est un écran tactile, par exemple porté par une tablette, au moins un pictogramme affiché sur l'écran additionnel (40A, 40B) étant propre à être sélectionné tactilement par un utilisateur de l'écran additionnel (40A, 40B).

10. Procédé d'affichage pour un aéronef, comprenant les étapes suivantes :
- fourniture d'un système (10) selon l'une ou quelconque des revendications précédentes ;
- affichage d'une première fenêtre d'affichage (46A à 46F) sur au moins un écran de base (32A à 32D), la première fenêtre d'affichage (46A à 46F) affichant au moins un pictogramme représentatif d'un paramètre et/ou d'une commande de l'aéronef ;
- dans un état opérationnel donné de l'aéronef, affichage sur l'écran additionnel (40A, 40B) d'une fenêtre de synthèse (60D à 60I) dépendant de l'état opérationnel de l'aéronef, **caractérisé en ce que** la fenêtre de synthèse (60D à 60I) comprend au moins le premier pictogramme affiché sur la première fenêtre d'affichage sans être affiché sur une deuxième fenêtre d'affichage des moyens principaux d'affichage (30) et au moins un deuxième pictogramme destiné à être affiché séparément sur la deuxième fenêtre d'affichage des moyens principaux d'affichage (30), sans être affiché sur la première fenêtre d'affichage des moyens principaux d'affichage (30), et **en ce que** le procédé comprend :
- dans un premier état opérationnel de l'aéronef, l'affichage par les moyens additionnels (42) de gestion d'interface d'une première fenêtre de synthèse (60D à 60I) comprenant un premier jeu de pictogrammes issus de deux fenêtres d'affichage séparées (46A à 46F) des moyens principaux d'affichage (30),
- la détection d'un état opérationnel courant de l'aéronef par les moyens de détection,
- un basculement automatique, par les moyens de commutation automatique ,de l'affichage sur l'écran additionnel (40A, 40B) depuis la première fenêtre de synthèse (60D à 60H) vers une deuxième fenêtre de synthèse (60D à 60H) en fonction de l'état opérationnel courant détecté par les moyens de détection, la deuxième fenêtre de synthèse comportant un deuxième jeu de pictogrammes issu de deux fenêtres d'affichage séparées (46A à 46F) des moyens principaux d'affichage (30), le premier jeu de pictogrammes étant différent du deuxième jeu de pictogrammes.

11. Procédé selon l'une quelconque des revendications 10 , **caractérisé en ce qu'**il comporte l'affichage de la première fenêtre d'affichage (46A à 46F) sur un premier écran de base (32A à 32D) des moyens principaux d'affichage (30), et l'affichage séparé de la deuxième fenêtre d'affichage (46A à 46F) sur un deuxième écran de base (32A à 32D) des moyens principaux d'affichage (30), distinct du premier écran de base (32A à 32D), les moyens additionnels de gestion (42) de l'interface graphique affichant sur l'écran additionnel (40A, 40B) une fenêtre de synthèse (60D à 60I) comprenant au moins un premier pictogramme affiché sur la première fenêtre d'affichage (46A à 46F) et au moins un deuxième pictogramme affiché sur la deuxième fenêtre d'affichage (46A à 46F).

12. Procédé selon l'une ou quelconque des revendications 10 ou 11, **caractérisé en ce que** les moyens principaux d'affichage (30) affichent une première fenêtre d'affichage (46A à 46F) sur un premier écran de base (32A à 32D), une deuxième fenêtre d'affichage étant propre à être affichée sur le premier écran de base (32A à 32D) par les moyens (34) de gestion de l'interface graphique en remplacement ou en complément de la première fenêtre d'affichage (46A à 46F), les moyens additionnels (42) de gestion de l'interface graphique de l'écran additionnel (40A, 40B) affichant sur l'écran additionnel une fenêtre de synthèse (60D à 60I) comprenant un premier pictogramme affiché sur la première fenêtre d'affichage (46A à 46F) des moyens principaux d'affichage (30) et un deuxième pictogramme destiné à être affiché sur la deuxième fenêtre d'affichage des moyens principaux d'affichage (30) sans être affiché sur la première fenêtre d'affichage (46A à 46F) des moyens principaux d'affichage (30).

## Patentansprüche

1. Anzeigesystem (10) für ein Luftfahrzeug, das Anzeigehauptmittel (30) aufweist, umfassend:
- mindestens einen Grundbildschirm (32A bis 32D) und
- Mittel (34) zum Verwalten der Grafikschnittstelle des oder jedes Grundbildschirms (32A bis 32D), wobei die Verwaltungsmittel (34) geeignet sind, in getrennter Weise auf den Anzeigehauptmitteln (30) mindestens ein erster Anzeigefenster (46A bis 46F) und mindestens ein zweites Anzeigefenster (46A bis 46F) anzuzeigen, wobei jedes Anzeigefenster (46A bis 46F) mindestens ein Piktogramm anzeigt, das für einen Parameter und/oder eine Steuerung des Luftfahrzeuges repräsentativ ist,
- Anzeigezusatzmittel (38) umfassend:
- mindestens einen Zusatzbildschirm (40A, 40B); und Zusatzmittel (42) zum Verwalten der Grafikschnittstelle des Zusatzbildschirmes (40A, 40B), die geeignet sind, auf dem Zusatzbildschirm (40A, 40B) in einem gegebenen Betriebszustand des Luftfahrzeugs ein von dem Betriebszustand des Luftfahrzeugs abhängiges Zusammenfassungsfenster (60D bis 60I) anzuzeigen, **dadurch gekennzeichnet, dass** das Zusammenfassungsfenster (60D bis 60I) mindestens ein erstes Piktogramm (90A bis 90Q), das geeignet ist, auf dem ersten Anzeigefenster (46A bis 46F) der Anzeigehauptmittel (30) angezeigt zu werden, ohne auf dem zweiten Fenster (46A bis 46F) der Anzeigehauptmittel angezeigt zu werden, und mindestens ein zweites Piktogramm (90A bis 90Q) umfasst, dass geeignet ist, auf dem zweiten Anzeigefenster (46A bis 46F) der Anzeigehauptmittel (30) angezeigt zu werden, ohne auf dem ersten Fenster (46A bis 46F) der Anzeigehauptmittel (30) angezeigt zu werden, wobei die Zusatzmittel (42) zum Verwalten der Schnittstelle geeignet sind, ein erstes Zusammenfassungsfenster (60D bis 60H), das einen ersten Satz Piktogramme (90A bis 90Q) umfasst, die von zwei getrennten Fenstern (46A bis 46F) der Anzeigehauptmittel (30) stammen, in einem ersten Betriebszustand des Luftfahrzeuges und ein zweites Zusammenfassungsfenster (60D bis 60H), das einen zweiten Satz Piktogramme (90A bis 90Q) umfasst, die von zwei getrennten Fenstern (46A bis 46D) der Anzeigehauptmittel (30) stammen, in einem zweiten Betriebszustand des Luftfahrzeugs anzuzeigen, wobei der erste Satz Piktogramme unterschiedlich zu dem zweiten Satz Piktogramme ist,
und das die Zusatzmittel (42) zum Verwalten der Schnittstelle Mittel zum Detektieren eines aktuellen Betriebszustandes des Luftfahrzeuges und Mittel zum automatischen Umschalten umfassen, die geeignet sind, automatisch die Anzeige auf dem Zusatzbildschirm (40A, 40B) von dem ersten Zusammenfassungsfenster (60D bis 60H) zu dem zweiten Zusammenfassungsfenster (60D bis 60H) abhängig von dem aktuellen Betriebszustand, der von den Detektionsmitteln detektiert wird, umzuschalten.

2. System (10)nach Anspruch 1, **dadurch gekennzeichnet, dass** die Anzeigehauptmittel (30) einen ersten Grundbildschirm (32B) und einen zweiten Grundbildschirm (32D), unterschiedlich zu dem und entfernt vom ersten Grundbildschirm (32B) umfassen, wobei die Verwaltungsmittel (34) geeignet sind, das erste Anzeigefenster (46N) auf dem ersten Grundbildschirm (32B) anzuzeigen und getrennt dazu das zweite Fenster (46M) auf dem zweiten Grundbildschirm (32D) anzuzeigen.

3. System (10) nach Anspruch 2, **dadurch gekennzeichnet, dass** der erste Grundbildschirm (32A, 32B) ein Steuer-Primärbildschirm ist, der geeignet ist, für die Steuerparameter des Luftfahrzeuges repräsentative Piktogramme anzuzeigen, wobei der zweite Grundbildschirm (32C, 32D) ein Vielzweckbildschirm ist, der geeignet ist, für die Navigation des Luftfahrzeuges und/oder die Verwaltung der Systeme des Luftfahrzeugs repräsentative Piktogramme anzuzeigen.

4. System (10) nach Anspruch 1 oder 2, **dadurch gekennzeichnet, dass** die Anzeigehauptmittel (30) einen ersten Grundbildschirm (32D) umfassen, wobei die Verwaltungsmittel (34) geeignet sind, das erste Fenster (46Q) auf den ersten Grundbildschirm (32D) anzuzeigen und das zweite Fenster (46R) auf dem ersten Grundbildschirm (32D) in Ersetzung oder zusätzlich zum ersten Fenster (46Q), vorteilhafterweise auf Eingreifen eines Benutzers mit einem Steuerelement für die Anzeige des ersten Grundbildschirm (32D), anzuzeigen.

5. System (10) nach einem beliebigen der vorhergehenden Ansprüche, **dadurch gekennzeichnet, dass** die Zusatzmittel (42) zum Verwalten geeignet sind, selektiv in dem gleichen Betriebszustand des Luftfahrzeuges mindestens ein erstes Zusammenfassungsfenster (60D) und mindestens ein erstes zusätzliches Zusammenfassungsfenster (60E) anzuzeigen, wobei die Anzeigehilfsmittel (38) ein Mittel zum Auswählen des ersten Zusammenfassungsfensters (60D) und/oder des ersten zusätzlichen Zusammenfassungsfenster (60E) durch einen Benutzer umfassen.

6. System (10) nach einem beliebigen der vorhergehenden Ansprüche, **dadurch gekennzeichnet, dass** die Zusatzmittel (42) zum Verwalten der Schnittstelle geeignet sind, auf dem Zusatzbildschirm (40A, 40B) eine Mensch-/Maschineschnittstelle (42), wie eine alphanumerische Tastatur anzuzeigen.

7. System (10) nach einem beliebigen der vorhergehenden Ansprüche, **dadurch gekennzeichnet, dass** die Zusatzmittel (42) zum Verwalten der Grafikschnittstelle geeignet sind, auf dem Zusatzbildschirm (40A, 40B) unabhängig von dem Betriebszustand des Luftfahrzeugs mindestens ein vorbestimmtes Fenster (60A, 60B, 60C) von Piktogrammen, die für Parameter und/oder Flugbefehle repräsentativ sind, anzuzeigen.

8. System (10) nach einem beliebigen der vorhergehenden Ansprüche, **dadurch gekennzeichnet, dass** jedes Piktogramm für einen Parameter und/oder einen Flugbefehl repräsentativ ist, das zwischen einem alphanumerischen oder analogen Indikator eines Flugparameters, einem virtuellen Knopf, der geeignet ist, eine Steuerung eines Luftfahrzeugsystems zu betätigen, einem Kürzel für den Zugang zu einem anderen Fenster, einem Weg für den Zugang zu einer Dokumentation und/oder einem Eingabefeld von alphanumerischen Daten, ausgewählt wird.

9. System (10) nach einem beliebigen der vorhergehenden Ansprüche, **dadurch gekennzeichnet, dass** der Zusatzbildschirm (40A, 40B) ein Touchscreen, beispielsweise durch ein Tablet vorgegebener Touchscreen ist, wobei mindestens ein auf dem Zusatzbildschirm (40A, 40B) angezeigtes Piktogramm geeignet ist, taktil durch den Benutzer auf dem Zusatzbildschirm (40A, 40B) ausgewählt zu werden.

10. Anzeigeverfahren für ein Luftfahrzeug, folgende Schritte umfassend:
- Bereitstellen eines Systems (10) nach einem beliebigen der vorhergehenden Ansprüche;
- Anzeigen eines ersten Anzeigefensters (46A bis 46F) auf mindestens einen Grundbildschirm (32A bis 32D), wobei das erste Anzeigefenster (46A bis 46F) mindestens ein für einen Parameter und/oder eine Steuerung des Luftfahrzeugs repräsentatives Piktogramm anzeigt;
- Anzeigen auf dem Zusatzbildschirm (40A, 40B) in mindestens einem gegebenen Betriebszustand des Luftfahrzeuges eines Zusammenfassungsfensters (60D bis 60I) abhängig von dem Betriebszustand des Luftfahrzeuges, **dadurch gekennzeichnet, dass** das Zusammenfassungsfenster (60D bis 60I) mindestens das erste Piktogramm, das auf dem ersten Anzeigefenster angezeigt wird, ohne auf dem zweiten Anzeigefenster der Anzeigehauptmittel (30) angezeigt zu werden, und mindestens ein zweites Piktogramm, das vorgesehen ist, getrennt auf dem zweiten Anzeigefenster der Anzeigehauptmittel (30) angezeigt zu werden, ohne auf dem ersten Anzeigefenster der Anzeigehauptmittel (30) angezeigt zu werden, umfasst
und dass das Verfahren umfasst:
- Anzeigen eines ersten Zusammenfassungsfensters (69D bis 60I) durch die Zusatzmittel (42) zum Verwalten der Schnittstellen in einem ersten Betriebszustand des Luftfahrzeuges, das einen ersten Satz von Piktogrammen, die von zwei getrennten Anzeigefenstern (46A bis 46F) der Anzeigehauptmittel (30) stammen, umfasst,
- Detektieren eines ersten aktuellen Betriebszustandes des Luftfahrzeuges durch die Detektionsmittel,
- automatisches Umschalten der Anzeige auf dem Zusatzbildschirm (40A, 40B) von dem ersten Zusammensetzungsfenster (60D bis 60H) zu einem zweiten Zusammensetzungsfenster (60D bis 60H) abhängig von dem aktuellen Betriebszustand, der durch die Detektionsmittel detektiert wird, durch die Mittel zum automatischen Umschalten, wobei das zweite Zusammensetzungsfenster einen zweiten Satz von Piktogrammen umfasst, die von zwei getrennten Anzeigefenstern (46A bis 46F) der Anzeigehauptmittel (30) stammen, wobei der erste Satz von Piktogrammen unterschiedlich zu dem zweiten Satz von Piktogrammen ist.

11. Verfahren nach einem beliebigen der Ansprüche 10, **dadurch gekennzeichnet, dass** es das Anzeigen des ersten Anzeigefensters (46A bis 46F) auf dem ersten Grundbildschirm (32A bis 32D) der Anzeigehauptmittel (30) und das Anzeigen, getrennt von der den zweiten Anzeigefenster (46A bis 46F), auf einem zweiten Grundbildschirm (32A bis 32D) der Anzeigehauptmittel (30), unterschiedlich zu dem ersten Grundbildschirm (32A bis 32D), aufweist, wobei die Zusatzmittel zum Verwalten (42) der Grafikschnittstelle auf den Zusatzbildschirm (40A, 40B) ein Zusammensetzungsfenster (60D bis 60I) anzeigen, das mindestens ein erstes auf dem ersten Anzeigefenster (46A bis 46F) angezeigtes Piktogramm und mindestens ein zweites auf dem zweiten Anzeigefenster (46A bis 46F) angezeigtes Piktogramm umfasst.

12. Verfahren nach einem beliebigen der Ansprüche 10 oder 11, **dadurch gekennzeichnet, dass** die Anzeigehauptmittel (30) ein erstes Anzeigefenster (46A bis 46F) auf einem ersten Grundbildschirm (32A bis 32D) anzeigen, wobei ein zweites Anzeigefenster geeignet ist, auf dem ersten Grundbildschirm (32A bis 32D) durch die Mittel (34) zum Verwalten der Grafikschnittstelle in Ersetzung oder zusätzlich zu dem ersten Anzeigefenster (46A bis 46F) angezeigt zu werden, wobei die Zusatzmittel (42) zum Verwalten der Grafikschnittstelle des Zusatzbildschirms (40A, 40B) auf dem Zusatzbildschirm ein Zusammensetzungsfenster (60D bis 60I) anzeigen, das ein erstes, auf dem ersten Anzeigefenster (46A bis 46F) der Anzeigehauptmittel (30) angezeigtes Piktogramm und ein zweites Piktogramm umfasst, das vorgesehen ist, auf dem zweiten Anzeigefenster der Anzeigehauptmittel (30) angezeigt zu werden, ohne auf dem ersten Anzeigefenster (46A bis 46F) der Anzeigehauptmittel (30) angezeigt zu werden.

## Claims

1. A display system (10) for an aircraft, comprising main display means (30) including:
- at least one basic screen (32A-32D), and
- means (34) for handling the graphic interface of said or each basic screen (32A-32D), the handling means (34) being able to separately display on the main display means (30) at least one first display window (46A-46F) and at least one second display window (46A-46F), each display window (46A-46F) displaying at least one pictogram representative of a parameter and/or a control of the aircraft,
- additional display means (38) including:
- at least one additional screen (40A, 40B), and
- additional means (42) for handling the graphic interface of the additional screen (40A, 40B) able to display on the additional screen (40A, 40B), in a given operational state of the aircraft, a summary window (60D-60I) depending on the operational state of the aircraft, **characterized in that** the summary window (60D-60I) comprises at least one first pictogram (90A-90Q) able to be displayed on the first display window (46A-46F) of the main display means (30) without being displayed on the second window (46A-46F) of the main display means, and at least one second pictogram (90A-90Q) intended to be displayed on the second display window (46A -46F) of the main display means (30) without being displayed on the first window (46A -46F) of the main display means (30), the additional interface handling means (42) being able to display a first summary window (60D-60H) comprising a first set of pictograms (90A-90Q) stemming from two separate windows (46A -46F) of the main display means (30) in a first operational state of the aircraft, and a second summary window (60D-60H) comprising a second set of pictograms (90A-90Q) stemming from two separate windows (46A -46D) of the main display means (30) in a second operational state of the aircraft, the first set of pictograms being different from the second set of pictograms,
and **in that** the additional interface handling means (42) comprise means for detecting a current operational state of the aircraft, and automatic switching means capable of automatically switching the display onto the additional screen (40A, 40D) from the first summary window (60D-60H) towards the second summary window (60D-60H) depending on the current operational state detected by the detection means.

2. The system (10) according to claim 1, **characterized in that** the main display means (30) comprise a first basic screen (32B) and a second basic screen (32D), distinct and away from the first basic screen (32B), the handling means (34) being able to display the first display window (46N) on the first basic screen (32B), and to separately display the second window (46M) on the second basic screen (32D).

3. The system (10) according to claim 2, **characterized in that** the first basic screen (32A, 32B) is a primary piloting screen able to display pictograms representative of piloting parameters of the aircraft, the second basic screen (32C, 32D) being a multi-functional screen able to display pictograms representative of the navigation of the aircraft and/or of the handling of systems of the aircraft.

4. The system (10) according to claim 1 or 2, **characterized in that** the main display means (30) comprise a first basic screen (32D), the handling means (34) being able to display the first window (46Q) on the first basic screen (32D), and to display the second window (46R) on the first basic screen (32D) as a replacement of or an addition to the first window (46Q), advantageously upon interaction of a user with a control member of the display of the first basic screen (32D).

5. The system (10) according to any of the preceding claims, **characterized in that** the additional handling means (42) are able to selectively display in the same operational state of the aircraft, at least one first summary window (60D) and at least one first additional summary window (60E), the auxiliary display means (38) comprising a means for selection by a user of the first summary window (60D) and/or of the first additional summary window (60E).

6. The system (10) according to any of the preceding claims, **characterized in that** the additional interface handling means (42) are able to display on the additional screen (40A, 40B) a man/machine dialog interface (72), such as an alphanumerical keyboard.

7. The system (10) according to any of the preceding claims, **characterized in that** the additional graphic interface handling means (42) are able to display on the additional screen (40A, 40B), independently of the operational state of the aircraft, at least one predefined window (60A, 60B, 60C) of pictograms representative of flight parameters and/or controls.

8. The system (10) according to any of the preceding claims, **characterized in that** each pictogram is representative of a flight parameter and/or control selected from an alphanumerical or analog indicator of a flight parameter, a virtual button able to actuate a control of a system of the aircraft, a short cut for accessing another window, a path for accessing documentation, or/and a field for inputting alphanumerical data.

9. The system (10) according to any of the preceding claims, **characterized in that** the additional screen (40A, 40B) is a touchscreen, for example borne by a tablet, at least one pictogram displayed on the additional screen (40A, 40B) being able to be tactily selected by a user of the additional screen (40A, 40B).

10. A display method for an aircraft, comprising the following steps:
- providing a system (10) according to any or one of the preceding claims;
- displaying a first display window (46A -46F) on at least one basic screen (32A-32D), the first display window (46A -46F) displaying at least one pictogram representative of a parameter and/or a control of the aircraft;
- in a given operational state of the aircraft, displaying on the additional screen (40A, 40B) a summary window (60D-60I) depending on the operational state of the aircraft, **characterized in that** the summary window (60D-60I) comprises at least the first pictogram displayed on the first display window without being displayed on a second display window of the main display means (30) and at least one second pictogram intended to be separately displayed on the second display window of the main display means (30), without being displayed on the first display window of the main display means (30),
and **in that** the method comprises:
- in a first operational state of the aircraft, displaying by the additional interface handling means (42) of a first summary window (60D-60I) comprising a first set of pictograms stemming from two separate display windows (46A -46F) of the main display means (30),
- detecting a current operational state of the aircraft by the detection means,
- automatically switching, by the automatic switching means, the display onto the additional screen (40A, 40D) from the first summary window (60D-60H) towards the second summary window (60D-60H) depending on the current operational state detected by the detection means, the second summary window (60D-60I) including a second set of pictograms stemming from two separate display windows (46A -46F) of the main display means (30), the first set of pictograms being different from the second set of pictograms

11. The method according to any of claim 10, **characterized in that** it includes the display of the first display window (46A -46F) on a first basic screen (32A-32D) of the main display means (30), and the separate display of the second display window (46A-46F) on a second basic screen (32A-32D) of the main display means (30), distinct from the first basic screen (32A-32D), the additional graphic interface handling means (42) displaying on the additional screen (40A, 40B) a summary window (60D-60I) comprising at least one first pictogram displayed on the first display window (46A -46F) and at least one second pictogram displayed on the second display window (46A -46F).

12. The method according to one or any of claims 10 or 11, **characterized in that** the main display means (30) display a first display window (46A -46F) on a first basic screen (32A-32D), a second display window being able to be displayed on the first basic screen (32A-32D) by the graphic interface handling means (34) as a replacement of or an addition to the first display window (46A -46F), the additional graphic interface handling means (42) of the additional screen (40A, 40B) displaying on the additional screen, a summary window (60D-60I) comprising a first pictogram displayed on the first display window (46A -46F) of the main display means (30) and a second pictogram intended to be displayed on the second display window of the main display means (30) without being displayed on the first display window (46A -46F) of the main display means (30).
